# EUROPÄISCHE PATENTSCHRIFT

(11) **EP 3 146 242 B1**
(45) Veröffentlichungstag und Bekanntmachung des Hinweises auf die Patenterteilung: **12.08.2020**
(21) Anmeldenummer: 15723514.4
(22) Anmeldetag: 20.05.2015
(51) Int. Cl.: F16H 59/02, F16H 61/24, G05G 5/06

(54) **HALTEVORRICHTUNG SOWIE STIFT ZUR ANORDNUNG IN EINER SOLCHEN HALTEVORRICHTUNG**
RETAINING DEVICE, AND PIN TO BE PLACED IN A RETAINING DEVICE OF SAID TYPE
DISPOSITIF DE RETENUE ET TIGE DESTINÉE À ÊTRE DISPOSÉE DANS UN TEL DISPOSITIF DE RETENUE

(30) Priorität: 20.05.2014 DE 102014107080
(43) Veröffentlichungstag der Anmeldung: 29.03.2017
(73) Patentinhaber: ECS Engineered Control Systems AG, 9000 St. Gallen (CH)
(72) Erfinder: SCHIRMER, Heiko, 21649 Regesbostel (DE)
(74) Vertreter: Müller, Eckhard
(86) Internationale Anmeldenummer: PCT/EP2015/061066
(87) Internationale Veröffentlichungsnummer: WO 2015/177186

(56) Entgegenhaltungen:
- EP-A1- 0 255 418
- EP-A1- 2 338 730
- DE-A1- 10 160 801
- DE-C1- 10 148 554
- KR-A- 20140 034 550

## Beschreibung

Die Erfindung betrifft eine Haltevorrichtung nach dem Oberbegriff des Patentanspruchs 1 sowie einen Stift zur Anordnung in einer solchen Haltevorrichtung nach dem Oberbegriff des Patentanspruchs 10.

Aus der DE 103 44 287 A1 ist sowohl eine derartige Haltevorrichtung als auch ein derartiger Stift zur Anordnung in einer solchen Haltevorrichtung bekannt. Solche Haltevorrichtungen und solche Stifte stellen dort Teile einer Rastiervorrichtung, die in einer Schaltvorrichtung für Kraftfahrzeuge zum Einsatz kommen. Der dortige Stift ist zylinderförmig ausgebildet und weist an seinem einen Ende einen Stiftkopf auf. Mit seinem zylinderförmigen Körper ist der Stift in einer Aufnahme einer Halterung verschiebbar angeordnet und mittels einer Druckfeder in axialer Richtung federkraftbeaufschlagt. Zwischen der dortigen Aufnahme der Halterung und dem Stift ist als Zentriervorrichtung ein geschlitzter Ring angeordnet. Zusammen mit einer Stiftkopfaufnahme bildet die dortige Halterung in Verbindung mit dem Stift die besagte Rastiervorrichtung. Dabei liegt der Stiftkopf an einer Kontaktoberfläche der Stiftkopfaufnahme an, wobei durch die Federkraftbeaufschlagung des Stiftes der Stiftkopf im dauerhaften Kontakt mit der Kontaktoberfläche der Stiftkopfaufnahme steht. An dem den Stiftkopf gegenüberliegenden Ende der Haltevorrichtung ist diese an eine Schaltvorrichtung angeordnet. Dabei steht die Haltevorrichtung in direktem Kontakt mit einem Schalthebel, der in einem Schwenkgelenk um zwei Schwenkachsen verschwenkbar gelagert ist.

Der als Zentriervorrichtung ausgebildete geschlitzte Ring liegt dabei mit einer schrägen Anlagekontur an einer komplementären schrägen Anlagekontur des Stiftes an und hält diesen dabei zentriert in der Aufnahme der Haltevorrichtung. Der Schlitz des Ringes ist dabei axial zur Längsachse des Stiftes ausgebildet und durchtrennt den dortigen Ring vollständig. Die Zentrierung des Stiftes durch den geschlitzten Ring erfolgt hierbei dadurch, dass die schragen Anlagekonturen als konische Flächen ausgebildet sind. Somit gleitet die konische Fläche des geschlitzten Ringes an der konischen Fläche des federkraftbeaufschlagten Stiftes ab, wobei der Ring dabei derart aufgeweitet wird, bis er an der Innenwandung der Halterung anliegt.

Unabhängig davon, ob die beweglich zueinander angeordneten Elemente der Haltevorrichtung, nämlich der Stift und der Ring, während des Betriebes der Haltevorrichtung ihre Funktion einwandfrei übernehmen, was aufgrund von Verschmutzungen nicht unbedingt der Fall sein muss, ist der konstruktive Aufbau dieser Haltevorrichtung zur Zentrierung des Stiftes innerhalb der Halterung aufwendig und aus mehreren zueinander beweglichen Teilen, nämlich dem Stift und den Ring, aufgebaut.

Weiterhin ist aus der DE 101 60 801 A1 eine Schalteinrichtung mit einem beweglich gelagerten Schalthebel und einer mit dem Schalthebel zusammenwirkenden Rastbolzenanordnung bekannt, die einen in einer Rastbolzenaufnahme axial beweglich gelagerten und durch eine Rastfeder gegen eine zugeordnete Schaltkulisse gedrückten Rastbolzen aufweist. Der Rastbolzen ist mit mehreren über seinen Umfang verteilt angeordnete, hebelartig ausgebildete, bewegliche Andruckarme versehen, die durch eine Rastfeder radial abgespreizt und unter elastischer Vorspannung an der Innenwandung der Aufnahme anliegen. Dabei sind die Andruckarme jeweils über Verschwenkstellen mit dem Rastbolzen beweglich verbunden. Die KR 10 2014 003 45 50 A offenbart eine ähnliches Funktionsprinzip.

Aus der DE 101 48 554 C1 ist eine Schalteinrichtung bekannt mit einem in Richtung seiner Längserstreckung in einem Rastbolzengehäuse beweglich gelagerten und sich unter Federvorspannung stehend in einer Schaltkulisse abstützenden Rastbolzen, der sowohl im Bereich seines Schaftes, nahe seiner Spitze als auch im Bereich seines hinteren, in das Rastbolzengehäuse hineinreichenden Endes an der Innenseite des Rastbolzengehäuses anliegende Führungsmittel aufweist. Diese Führungsmittel sind als biegeweiche Führungsrippen ausgebildet, durch welche der Rastbolzen im Rastbolzengehäuse geführt ist.

Eine ähnliche Ausbildung eines Raststößels zur Betätigung einer Fahrtrichtungsanzeige ist aus der DE 10 2009 058 719 A1 bekannt.

Die EP 2 338 730 A1 offenbart eine Anordnung zur Erzeugung einer Haptik bei einem Bedienelement. Das Bedienelement weist einen in einer nicht näher beschriebenen Aussparung geführten Stößel auf, wobei an dem Stößel axial schräg angebrachte flexible Rippen vorhanden sind.

Die EP 0 255 418 A1 offenbart ebenfalls eine Rastbolzenführung.

Es ist daher Aufgabe der Erfindung, eine Haltevorrichtung der eingangs genannten Art derart weiterzubilden, dass eine Bauteilreduzierung bei gleichzeitiger Reduzierung der beweglich zueinander angeordneten Teile erreicht wird. Weiterhin ist es Aufgabe der Erfindung einen Stift zur Anordnung in einer derartigen Halterung zur Verfügung zu stellen, der ohne eine separate Zentriervorrichtung innerhalb einer derartigen Haltevorrichtung anordnenbar und während des Betriebes der Haltevorrichtung dahin sicher zentrierbar ist, sodass die ordnungsgemäße Funktion der Haltevorrichtung sichergestellt ist.

Hinsichtlich der Haltevorrichtung wird diese Aufgabe gelöst durch eine Haltevorrichtung mit allen Merkmalen des Patentanspruchs 1. Hinsichtlich des Stiftes wird diese Aufgabe gelöst durch einen Stift mit allen Merkmalen des Patentanspruchs 10. Vorteilhafte Ausgestaltungen der Erfindung finden sich in den Unteransprüchen.

Die erfindungsgemäße Haltevorrichtung weist eine Halterung mit einer Aufnahme, einen in der Aufnahme der Halterung längsverschiebbar geführten, federkraftbeaufschlagten und einen Stiftkopf aufweisenden Stift und eine Zentriervorrichtung auf, wobei der Stiftkopf aus der Aufnahme der Halterung herausragt. Die Haltevorrichtung zeichnet sich dadurch aus, dass die Zentriereinrichtung an dem Stift unverschiebbar angeordnet ist und innerhalb der Aufnahme der Halterung mit einer Rückstellkraft versehen ist, welche gegen die Halterung gerichtet ist.

Mittels der erfindungsgemäßen Haltevorrichtung ist es nunmehr möglich, den Stift mit der Zentriereinrichtung während der Herstellung der erfindungsgemäßen Haltevorrichtung einstückig darin anzuordnen, sodass der Aufwand beim Zusammenbauen der Haltevorrichtungen minimiert ist. Ferner ist durch die unverschiebbar an dem Stift angeordnete Zentriereinrichtung erreicht, dass auf aufwendige Konturen der Zentriereinrichtung und des Stiftes, die beim Zentrieren des Stiftes in der Halterung aneinander abgleiten, verzichtet werden kann. Insofern ist auch der konstruktive Aufwand für die Herstellung des Stiftes und der Zentriereinrichtung und somit der gesamten erfindungsgemäßen Haltevorrichtung minimiert, da auf derartige Geometrien bei der Konstruktion keine Rücksicht genommen werden muss und die daher während der Herstellung auch nicht in einem Toleranzbereich gehalten werden müssen. Zudem ist erfindungsgemäß die Anzahl beweglich zueinander angeordneten Teile minimiert, sodass dadurch auch mögliche Fehlfunktionen minimiert sind.

Nach einem ersten vorteilhaften Gedanken der Erfindung bestehen die Zentriereinrichtung und der Stift aus dem gleichen Material. Durch diese Maßnahme ist es in einfacher Weise möglich, die Zentriereinrichtung und den Stift unverschiebbar gegeneinander anzuordnen, indem beispielsweise beide Teile miteinander verbunden, insbesondere verschweißt werden.

Von besonderem Vorteil ist es allerdings, wenn die Zentriereinrichtung und der Stift einstückig ausgebildet sind und vorzugsweise aus einem Kunststoff bestehen. Eine einstückige Ausbildung der Zentriereinrichtung und des Stiftes erlauben es nämlich, beide Teile in einem einzigen Herstellungsschritt gemeinsam herzustellen. Hierdurch ist es möglich, auf Verbindungen der Zentriereinrichtung mit dem Stift zu verzichten. Dies ist insbesondere deshalb vorteilhaft, da solche Verbindungen gegebenenfalls Schwachstellen darstellen können, die zu Fehlern während des Betriebes der erfindungsgemäßen Haltevorrichtung und damit zu Fehlfunktionen führen können. Besonders vorteilhaft ist es dabei, wenn die Zentriereinrichtung und der Stift in einem Spritzgussvorgang aus einem Kunststoff hergestellt werden.

Nach einem weiteren Gedanken der Erfindung weist der Stift ein Positionierungselement auf, das mit einer Aufnahme der Halterung korrespondiert. Dieses Positionierungselement dient insbesondere dazu, dass der Stift immer in der richtigen Anordnung in der Halterung montiert wird. Die richtige Anordnung ist nämlich hier von immenser Bedeutung, da in dem Stift und der Halterung miteinander korrespondierende Elemente, beispielsweise die eines Hall-Sensors, angeordnet sind, die eine exakte Positionsbestimmung des Stiftes und somit der Schaltung beziehungsweise des Getriebes des die erfindungsgemäße Halteeinrichtung aufweisenden Kraftfahrzeuges ermöglichen.

In der erfindungsgemäßen Haltevorrichtung besteht die Zentriereinrichtung aus wenigstens einer Lasche, vorzugsweise allerdings aus wenigstens zwei Laschen, die im Wesentlichen äquidistant über dem Umfang des Stiftes an demselben angeordnet sind. Mittels derartiger Laschen, die vorzugsweise einstückig mit dem Stift ausgebildet sind, ist es nun in einfacher Weise möglich, den Stift in der Aufnahme der Halterung während des Betriebes der Haltevorrichtung zu zentrieren. Durch die Anordnung von wenigstens zwei äquidistant über dem Umfang des Stiftes angeordneten Laschen, die vorzugsweise identisch ausgebildet sind, ist dabei eine besonders einfache genaue Zentrierung des Stiftes in der Aufnahme der Halterung gegeben. Als besonders bevorzugt hat sich dabei erwiesen, vier identische Laschen zu verwenden, die jeweils um 90 Grad versetzt über dem Umfang des Stiftes, vorzugsweise - was aber nicht zwingend erforderlich ist - auf gleicher Höhe angeordnet sind, zu verwenden. Die Verwendung von vier derartigen Laschen ist ein besonders guter Kompromiss hinsichtlich einer idealen Anzahl von Laschen, um eine exakte Zentrierung des Stiftes in der Aufnahme der Halterung zu erreichen, wobei diese die für die dauerhafte Zentrierung notwendige Steifigkeit und Elastizität aufweisen, insbesondere dann, wenn sie aus einem Kunststoff hergestellt sind.

Erfindungsgemäß ist zudem vorgesehen, dass die wenigstens eine Lasche bei einer Anordnung des Stiftes innerhalb der Aufnahme der Halterung mit einer Kontaktfläche eine Innenwand der Halterung kontaktiert, wobei vorzugsweise die Kontaktfläche parallel zur Innenwand verläuft. Hierdurch ist es ermöglicht, den Stift in einfacher Weise in der Aufnahme der Halterung zu zentrieren, wobei zwischen dem Stift und der Halterung mit Ausnahme im Bereich der Laschen ein äquidistanter Spalt gebildet ist. Durch die Ausbildung dieses äquidistanten Spaltes ist eine exakte Zentrierung des Stiftes in der Aufnahme der Halterung nochmals verbessert.

Nach einem besonders vorteilhaften Gedanken der Erfindung weist die wenigstens eine Lasche dabei ein Federelement auf, welches bei einer Anordnung des Stiftes innerhalb der Aufnahme der Halterung federnd in einer an dem Stift angeordneten Mulde gehalten ist. Hierbei sind die Laschen derart an dem Stift angeordnet, das ihre Rückstellkraft in Normalenrichtung der Längsachse des Stiftes gerichtet ist. Durch eine derartige Ausgestaltung der Erfindung ist es möglich, dass der Stift federnd in der Aufnahme der Halterung während des Betriebes der Haltevorrichtung gelagert ist, sodass auch auf die Haltevorrichtung einwirkende Kräfte abgefangen werden können, ohne dass die Haltevorrichtung ihre vorbestimmte Position aufgrund der Krafteinwirkung verlässt. Zudem ist dadurch sichergestellt, dass der Stift über seine gesamte Längserstreckung in der Aufnahme der Halterung exakt und sicher zentriert ist, ohne dass Kippbewegungen des Stiftes auftreten könne, die den Stift zumindest abschnittswese aus der exakte zentrierten Lage herausbewegen könnten.

Nach einem anderen Gedanken der Erfindung ist die wenigstens eine Lasche in einer Laschenaufnahme der Halterung gehalten. Hierbei wirkt die Rückstellkraft der Laschen im Gegensatz zu der zuvor beschriebenen Ausführungsform der Laschen nicht in Normalenrichtung der Längsachse des Stiftes, sondern in einer Tangentialenrichtung. Durch eine derartige Ausgestaltung der Erfindung ist zudem ein Verdrehen des Stiftes in der Aufnahme der Halterung vermieden. Die Vermeidung eines solchen Verdrehens ist zwingend erforderlich, da die richtige Anordnung des Stiftes innerhalb der Halterung nämlich von immenser Bedeutung ist, da in dem Stift und der Halterung miteinander korrespondierende Elemente, beispielsweise die eines Hall-Sensors, angeordnet sind, die eine exakte Positionsbestimmung des Stiftes und somit der Schaltung beziehungsweise des Getriebes des die erfindungsgemäße Halteeinrichtung aufweisenden Kraftfahrzeuges ermöglichen.

Dabei hat es sich als sinnvoll erwiesen, dass die wenigstens eine Lasche aus einem L-förmigen Element und einem I-förmigen Element besteht, die gegeneinander federnd an dem Stift angeordnet sind. Durch diese Ausgestaltung der Erfindung ist es in einfacher Weise ermöglicht, die Laschen des Stiftes federnd in Laschenaufnahmen der Halterung zu platzieren. Dabei sind die L-förmigen Elemente von den jeweiligen I-förmigen Elementen zu jeder Zeit beabstandet, sodass ein Federn der Lasche in der Laschenaufnahme und damit eine exakte Zentrierung des Stiftes in der Halterung immer gewährleistet ist.

Vorteilhafterweise ist die Halterung dabei kreuzförmig ausgebildet, sodass vier Laschenaufnahmen vorhanden sind, in welche jeweils eine entsprechende Lasche eines Stiftes eingreifen kann, der vier Laschen aufweist, die an ihm ebenfalls kreuzförmig jeweils um 90 Grad versetzt angeordnet sind.

Nach einer anderen Ausgestaltung der Erfindung ist zur Federkraftbeaufschlagung des Stiftes eine Druckfeder vorgesehen, welche sich vorzugsweise mit ihrem ersten Ende an einem Anschlag der Halterung und mit ihrem zweiten Ende an einem Anschlag des Stiftes abstützt, wobei unter einem Anschlag an dem Stift auch verstanden werden soll, dass sich dieser Anschlag gegebenenfalls an der wenigstens einen Lasche des Stiftes befindet. Durch eine derartige Druckfeder ist sichergestellt, dass der Stift mit seinem Stiftkopf während des Betriebes der Haltevorrichtung sicher in der Stiftkopfaufnahme gehalten ist und deren Kontaktoberfläche kontinuierlich kontaktiert.

Ferner ist die Haltevorrichtung zur Anordnung an einem Schalthebel einer Schaltvorrichtung eines Getriebes eines Kraftfahrzeuges, gegebenenfalls unter Zwischenschaltung eines Schaltgestänges oder eines Schaltzuges, ausgebildet, wobei der Stiftkopf zur Anlage an eine Kontaktoberfläche einer Stiftkopfaufnahme ausgebildet ist.

Der erfindungsgemäße Stift zur Anordnung in einer zuvor beschriebenen Haltevorrichtung weist einen Stiftkopf und einen Stiftkörper auf und ist dadurch gekennzeichnet, dass wenigstens eine Lasche vorgesehen ist, die an dem Stift befestigt ist und die unter Ausbildung einer Rückstellkraft gegen den Stift verschwenkbar ist. In einer vorteilhaften Ausgestaltung der Erfindung ist der Stift mit der wenigstens einen Lasche einstückig, vorzugsweise aus einem Kunststoff hergestellt.

Dabei weist die wenigstens eine Lasche ein Federelement auf, welches bei einem Verschwenken der wenigstens einen Lasche federnd in einer an dem Stift angeordneten Mulde aufnehmbar ist.

Weiterhin weist der Stift einen Anschlag auf, an welchem sich eine zwischen Stift und Halterung einer zuvor beschriebenen Haltevorrichtung angeordnete Druckfeder abstützen kann.

Nach einem weiteren Gedanken der Erfindung ist die wenigstens eine Lasche des Stiftes dazu ausgebildet, in einer Laschenaufnahme einer Halterung einer zuvor beschriebenen Halteeinrichtung aufgenommen zu werden.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1:: ein Ausführungsbeispiel einer Schaltvorrichtung für die Betätigung von Getrieben in Kraftfahrzeugen mit einem Ausführungsbeispiel einer erfindungsgemäßen Haltevorrichtung,
- Figur 2:: ein Ausführungsbeispiel einer erfindungsgemäßen Haltevorrichtung in einer seitlichen Ansicht,
- Figur 3:: die Haltevorrichtung gemäß Figur 2 in einer Draufsicht von vorne,

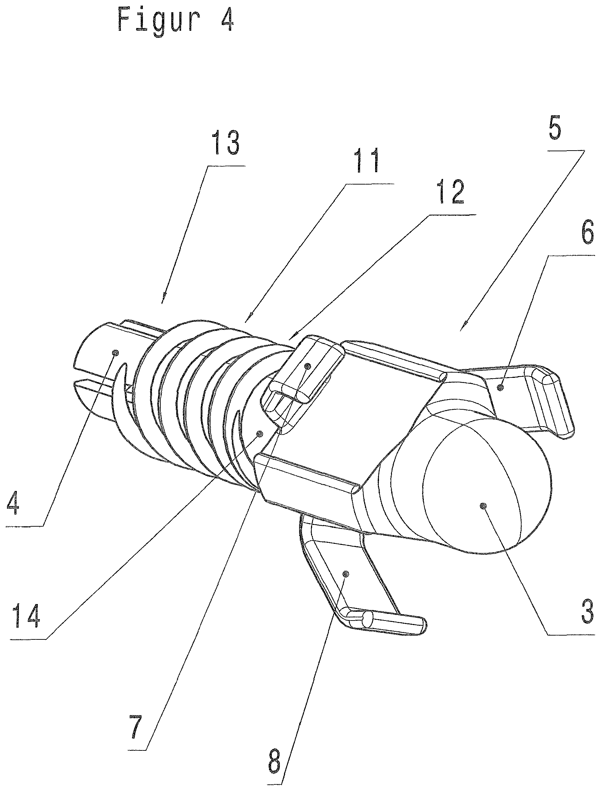

- Figur 4:: ein Ausführungsbeispiel eines erfindungsgemäßen Stiftes,
- Figur 5:: eine Querschnittdarstellung einer erfindungsgemäßen Haltevorrichtung,
- Figur 6:: ein weiteres Ausführungsbeispiel einer Schaltvorrichtung für die Betätigung von Getrieben in Kraftfahrzeugen mit einem weiteren Ausführungsbeispiel einer erfindungsgemäßen Haltevorrichtung,
- Figur 7:: die Haltevorrichtung der Figur 6 in einer Ansicht von unten,
- Figur 8:: die Schaltvorrichtung der Figur 6 in einer perspektivischen Ansicht,
- Figur 9:: die Haltevorrichtung der Figur 7 in einer Ansicht von unten ohne einen in die Halterung eingesetzten Stift,
- Figur 10:: die Haltevorrichtung der Figur 9 mit einem in der Halterung angeordneten Stift,
- Figur 11:: ein erfindungsgemäßer Stift für eine Haltevorrichtung der Figuren 6 bis 10 in einer perspektivischen Darstellung,
- Figur 12:: der Stift gemäß Figur 11 in einer Ansicht von unten in einem unmontierten Zustand und
- Figur 13:: der Stift der Figur 11 in einer Ansicht von unten in einem montierten Zustand.

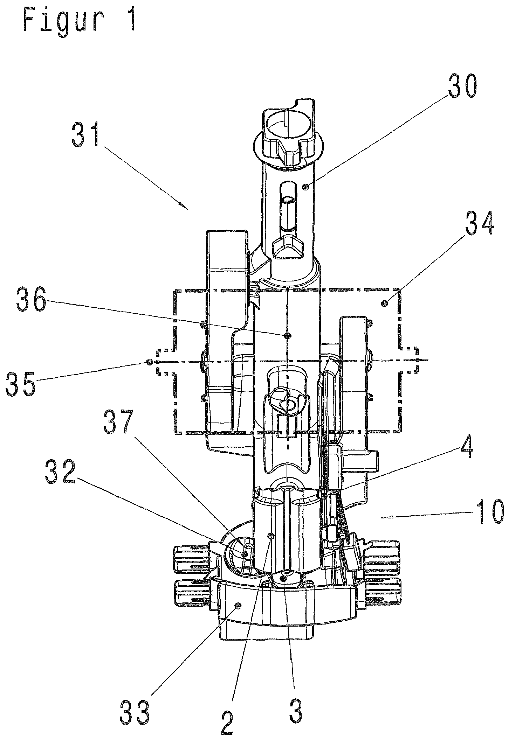

In der Figur 1 ist beispielhaft ein Aufbau einer Schaltvorrichtung 31 für die Betätigung eines Getriebes eines Kraftfahrzeugs dargestellt, wobei allerdings auf die Darstellung eines Schaltgehäuses, das mit dem Fahrzeugaufbau fest verbunden ist, verzichtet wurde. In dem fest mit dem Fahrzeugaufbau verbundenen Schaltgehäuse ist ein Schalthebel 30 mittels eines Schwenkgelenkes 34 um eine erste Schwenkachse 35 und eine zweite Schwenkachse 36 schwenkbar gelagert.

Am unteren, im Schaltgehäuse unterhalb des Schwenkgelenkes befindlichen Teil des Schalthebels 30 ist eine fest mit dem Schalthebel 30 verbundene Haltevorrichtung 10 vorgesehen, die aus einer eine Aufnahme 1 aufweisende Halterung 2 und einem in der Aufnahme 1 der Halterung 2 verschiebbar beweglichen Stift 4 besteht, wobei an dem aus der Aufnahme 1 der Halterung 2 herausragenden Ende des Stiftes 4 ein Stiftkopf 3 angeordnet ist. Die Haltevorrichtung 10 mit ihrer Halterung 2 und ihrem Stift 4 bilden zusammen mit einer Stiftkopfaufnahme 33, welche fest mit dem Schaltgehäuse verbunden ist, eine Rastiervorrichtung. Die Stiftkopfaufnahme 33 weist dabei eine Führungsnut 37 und eine Kontaktoberfläche 32 auf, welche mit dem Stift 4 beziehungsweise dem Stiftkopf 3 in Kontakt steht.

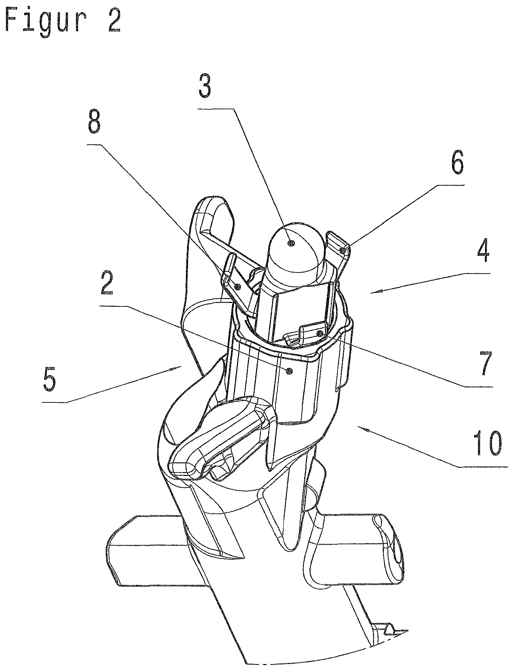

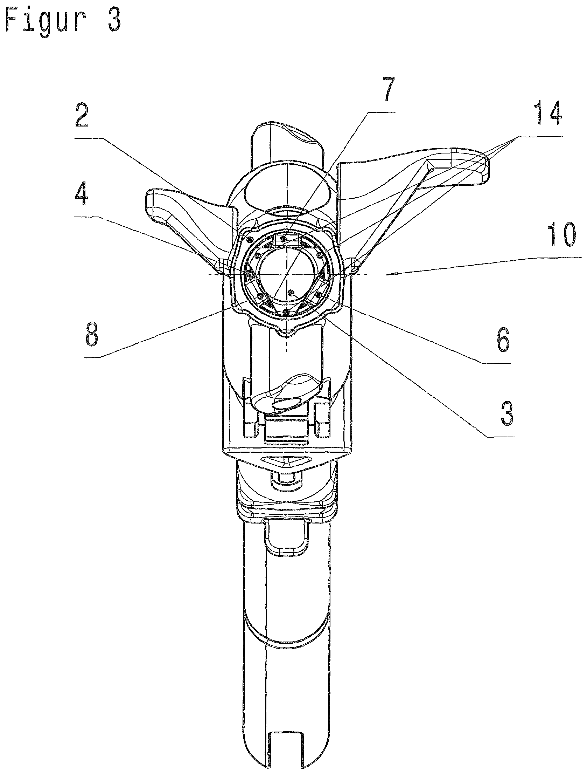

Ein erstes mögliches Ausführungsbeispiel einer erfindungsgemäßen Haltevorrichtung 10 ist in den Figuren 2 und 3 in verschiedenen Darstellungen wiedergegeben. Der Stift 4 beziehungsweise dem Stiftkopf 3 ist dabei derart ausgebildet, dass er in Kontakt mit der Kontaktoberfläche 32 der Stiftkopfaufnahme 33 steht, wenn die Haltevorrichtung in eine Schaltvorrichtung gemäß Figur 1 eingesetzt ist. Der Stift 4 beziehungsweise sein Stiftkopf 3 korrespondieren dabei mit der Kontaktoberfläche 32 der Stiftkopfaufnahme 33 derart, dass der Stiftkopf 3 in eine entsprechende Aufnahme der Stiftkopfaufnahme 33 einrasten kann. Diese eingerastete Stellung des Stiftkopfes 3 wir beispielhaft in der Figur 1 gezeigt.

Dieser Stift 4 ist entlang seiner Längsachse 9 in der Aufnahme 1 der Halterung 2 verschiebbar angeordnet. In den in Figuren dargestellten Ausführungsbeispielen der Haltevorrichtung 10 beziehungsweise des Stiftes 4 weist der Stift 4 drei Laschen 6, 7 und 8 auf, die gleichmäßig um 120° versetz über den Umfang des Stiftes 4 auf gleicher Höhe angeordnet sind und als Zentriereinrichtung 5 für den Stift 4 dienen. Der Stift 4 und die Laschen 6, 7 und 8 sind dabei einstückig aus einem Kunststoff hergestellt.

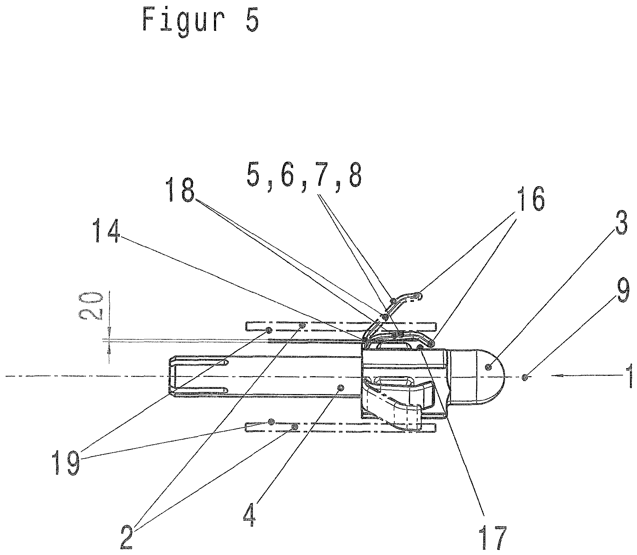

Die als Zentriereinrichtung 5 ausgebildeten Laschen 6, 7 und 8 sind dabei derart an den Stift 4 angeformt, dass sie im Zustand außerhalb der Aufnahme 1 der Halterung 2 in einem Winkel von dem Stift 4 abstehen, wie dies beispielsweise in der Teildarstellung der Figur 5 gezeigt ist. Sobald der Stift in die Aufnahme 1 der Halterung 2 eingeführt wir, verschwenken die Laschen 6, 7 und 8 jedoch unter Aufbau einer Rückstellkraft in Richtung des Stiftes 4.

Ist der Stift 4 mit den Laschen 6, 7 und 8 nun funktionsgemäß in der Aufnahme 1 der Halterung 2 aufgenommen, wie dies in der anderen Teildarstellung der Figur 5 gezeigt ist, liegen die Laschen 6, 7 und 8 mit Kontaktflächen 18 an der Innenwand 19 der Halterung 2 an. In dieser Stellung sind Federelemente 16 der Laschen 6, 7 und 8 in dazu korrespondierende Mulden 17 des Stiftes 4 aufgenommen.

Durch die Rückstellkraft der Laschen 6, 7 und 8 ist der Stift innerhalb der Aufnahme 1 der Halterung 2 sicher und exakt, unter Bildung eines äquidistanten Spaltes 20 zwischen Stift 4 und Innenwand 19 der Halterung 2, zentrier. Die Federelemente 16 dienen dazu, dass der Stift 4 auch unter Einwirkung äußerer Kräfte sicher in der zentrieten Position innerhalb der Aufnahme 1 der Halterung 2 verweilt.

Dadurch dass sich die Kontaktflächen 18 der Laschen 6, 7 und 8 über ihre gesamte Längserstreckung mit der Innenwand 19 der Halterung 7 in Kontakt stehen, ist zudem sichergestellt, dass der Stift 4 über seine gesamte Längserstreckung innerhalb der Aufnahme 1 der Halterung 7 exakt zentriert ist und keine Kippbewegung senkrecht zur Längserstreckung des Stiftes 4 stattfinden können, die den Stift 4 zumindest abschnittsweise aus seiner zentrierten Lage innerhalb der Aufnahme 1 der Halterung 2 herausbewegen könnten.

Damit der Stift 4 beziehungsweise der Stiftkopf 3 während des funktionsgemäßen Gebrauchs der Haltevorrichtung 10 immer in Kontakt mit der Kontaktoberfläche 32 der Stiftkopfaufnahme 33 steht, ist der Stift 4 innerhalb der Aufnahme 1 der Halterung 2 mittels einer Druckfeder 11 federkraftbeaufschlagt. Die Druckfeder 11 stützt sich dabei mit ihrem ersten Ende12 an einem Anschlag 14 des Stiftes 4 und mit ihrem zweiten Ende 13 an einem Anschlag 15 der Halterung 2 ab.

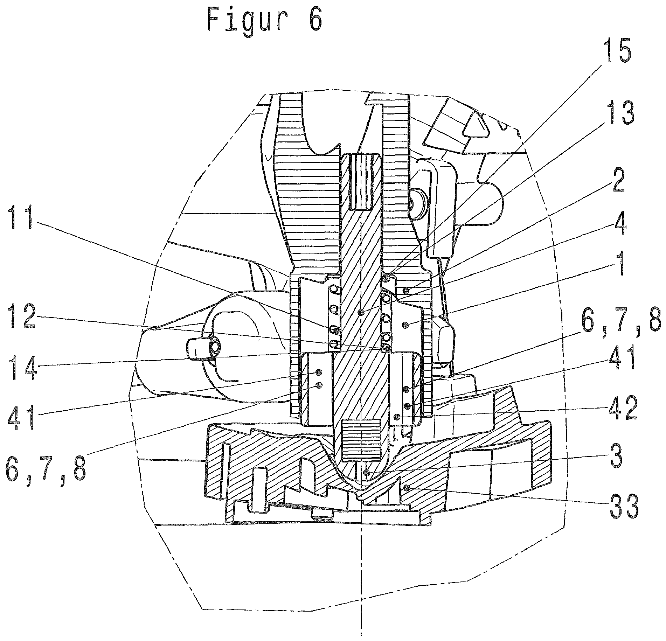

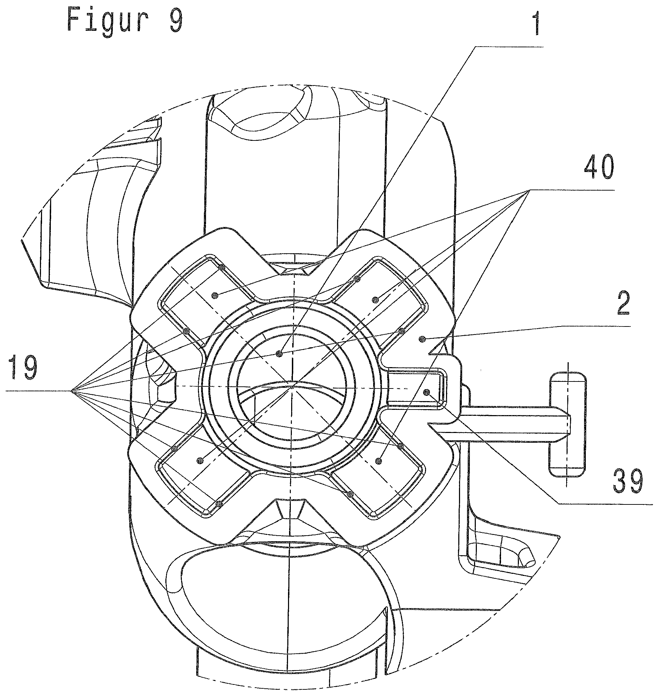

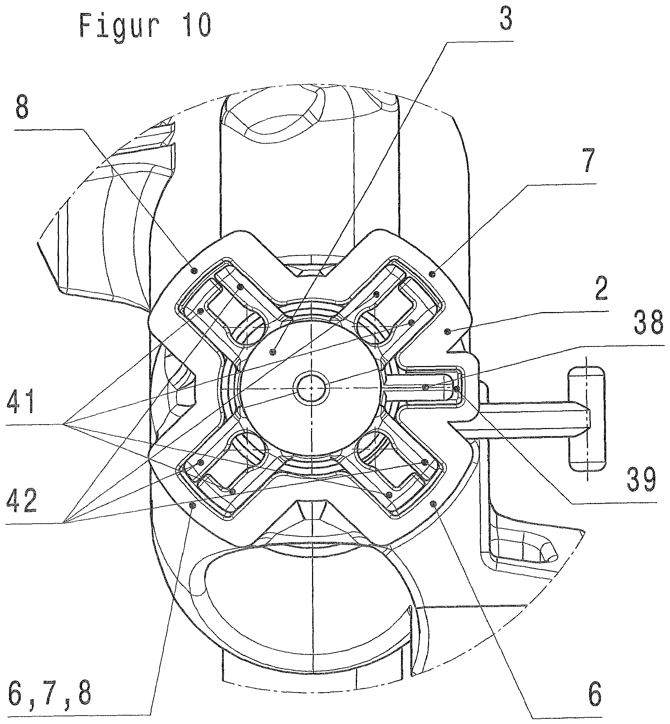

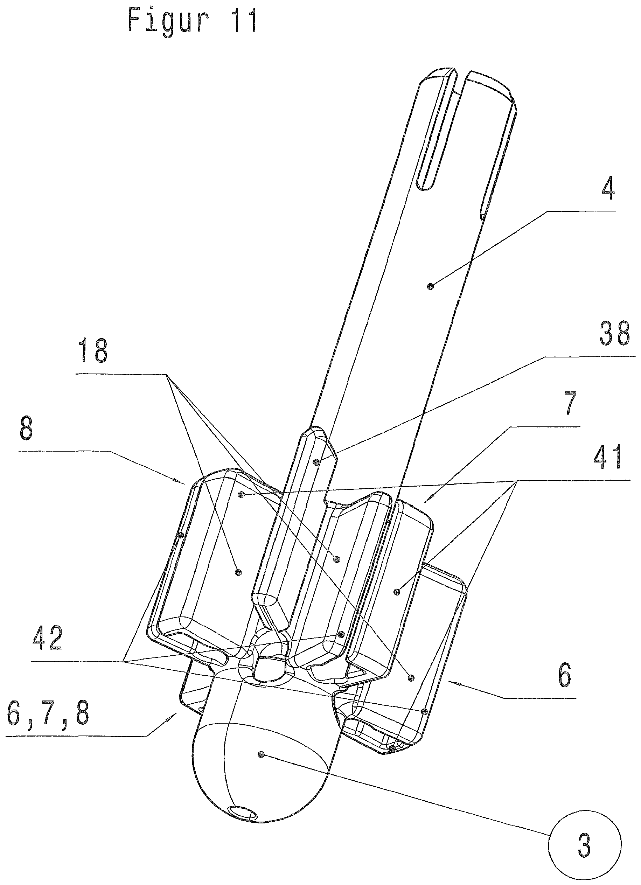

In den Figuren 6 bis 13 ist ein weiteres Ausführungsbeispiel einer erfindungsgemäßen Haltevorrichtung bzw. ein Stift für dieses Ausführungsbeispiel einer erfindungsgemäßen Haltevorrichtung dargestellt.

Auch in diesem Ausführungsbeispiel ist der Stift 4 innerhalb der Aufnahme 1 der Halterung 2 mittels einer Druckfeder 11 federkraftbeaufschlagt, damit der funktionsgemäße Gebrauch der Haltevorrichtung, wie zuvor bereits für das erste Ausführungsbeispiel beschrieben, gewährleistet ist. Die Druckfeder 11 stützt sich hierbei ebenfalls mit ihrem ersten Ende 12 an einem Anschlag 14 des Stiftes 4 und mit ihrem zweiten Ende 13 an einem Anschlag 15 der Halterung 2 ab.

Die Aufnahme 1 der Halterung 2 dieses Ausführungsbeispiels ist hierbei kreuzförmig ausgebildet. Durch diese kreuzförmige Ausbildung der Aufnahme 1 der Halterung 2 sind in der Aufnahme 1 Laschenaufnahmen 40 gebildet, in welchen Laschen 6, 7, 8 des Stiftes 4 aufgenommen werden können. Die Laschen 6, 7, 8 des Stiftes 4 sind dabei ebenfalls kreuzförmig jeweils um 90° versetzt über den Umfang des Stiftes 4 an diesem angeordnet.

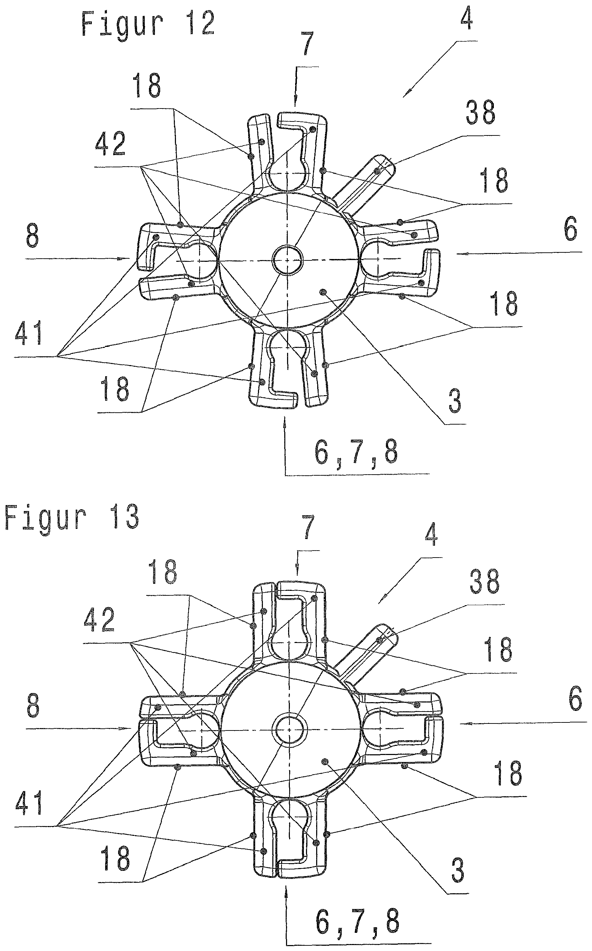

Die Laschen 6, 7, 8 sind in diesem Ausführungsbeispiel aus einem L-förmigen Element 41 und aus einem I-förmigen Element 42 gebildet, die jeweils an dem Stift 4 angeordnet sind, wobei sowohl das L-förmige Element 41 gegenüber dem I-förmigen Element 42 als auch umgekehrt das I-förmige Element 42 gegenüber dem L-förmigen Element 41 federnd, unter Ausbildung einer Rückstellkraft verschwenkbar ist. Das L-förmige Element 41 und das I-förmige Element 42 sind dabei derart federnd gegeneinander an dem Stift 4 angeordnet, dass sie sowohl im montierten Zustand, wie in Figur 13 dargestellt, als auch im unmontierten Zustand, wie in Figur 12 dargestellt, immer voneinander beabstandet sind, so dass zu jedem Zeitpunkt die Federeigenschaft der jeweiligen Lasche 6, 7, 8 sowohl in montiertem als auch in unmontiertem Zustand gewährleistet ist.

Sowohl das L-förmige Element 41 als auch das I-förmige Element 42 weisen dabei Kontaktflächen 18 auf, welche in montiertem Zustand an einer Innenwand 19 der Halterung 2 zum Liegen kommen. Durch die Federkraftbeaufschlagung der Lasche 6, 7, 8 bzw. dessen I-förmigen Elementes 42 und L-förmigen Elementes 41 ist in montiertem Zustand des Stiftes 4 in der Aufnahme 1 der Halterung 2 immer eine exakte Zentrierung des Stiftes 4 innerhalb der Aufnahme 1 der Halterung 2 gewährleistet.

Ferner weist in diesem Ausführungsbeispiel der erfindungsgemäße Stift 4 ein Positionierungselement 38 auf, welches in montiertem Zustand des Stiftes 2 in eine dazu korrespondierende Aufnahme 39 der Halterung 2 der Haltevorrichtung 10 aufnehmbar ist. Dieses Positionierungselement 38 dient im Wesentlichen dazu, das der Stift 4 in seiner richtigen Position in die Halterung 2 eingesetzt wird. Dies ist von immenser Bedeutung, da der Stift 4 und die Halterung 2 in der Regel miteinander korrespondierende, hier nicht dargestellte Elemente, beispielsweise die eines Hall-Sensors, aufweisen, die eine exakte Positionsbestimmung des Stiftes 4 und somit der Schaltung bzw. des Getriebes des die erfindungsgemäße Haltevorrichtung 10 aufweisenden Kraftfahrzeuges ermöglichen.

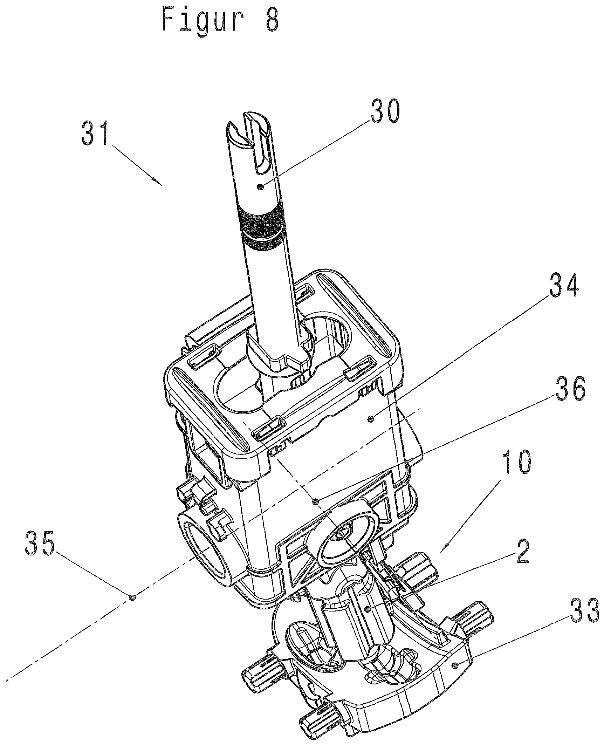

Wie insbesondere in Figur 8 dargestellt, ist die erfindungsgemäße Haltevorrichtung 10 in eine Schaltvorrichtung 31 integriert. Dabei weist die Schaltvorrichtung 31 einen Schalthebel 30 auf, der mittels eines Schwenkgelenkes 34 um eine erste Schwenkachse 35 und um eine zweite Schwenkachse 36 verschwenkbar gelagert ist.

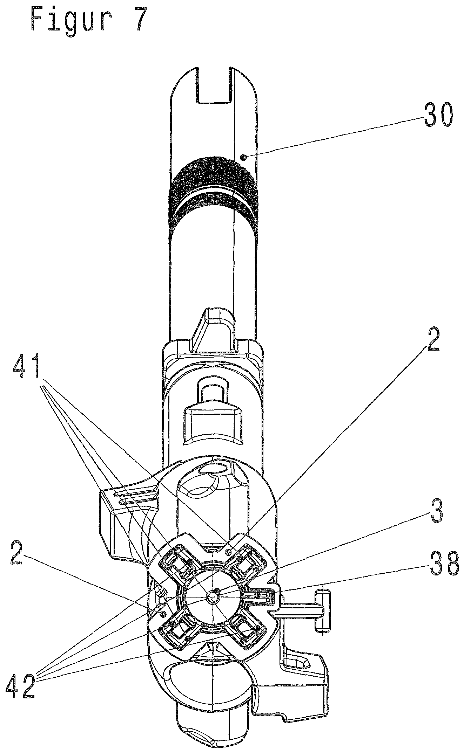

Die gesamte Haltevorrichtung 10 ist in diesem Ausführungsbeispiel gegenüber dem Schalthebel 30 abgewinkelt, wie dies besonders deutlich aus Figur 8 und auch der Darstellung der Figur 7 hervorgeht.

### Bezugszeichenliste

- 1: Aufnahme
- 2: Halterung
- 3: Stiftkopf
- 4: Stift
- 5: Zentriereinrichtung
- 6: Lasche
- 7: Lasche
- 8: Lasche
- 9: Längsachse
- 10: Haltevorrichtung
- 11: Druckfeder
- 12: Erstes Ende
- 13: Zweites Ende
- 14: Anschlag
- 15: Anschlag
- 16: Federelement
- 17: Mulde
- 18: Kontaktfläche
- 19: Innenwand
- 20: Spalt
- 30: Schalthebel
- 31: Schaltvorrichtung
- 32: Kontaktoberfläche
- 33: Stiftkopfaufnahme
- 34: Schwenkgelenk
- 35: erste Schwenkachse
- 36: zweite Schwenkachse
- 37: Führungsnut
- 38: Positionierungselement
- 39: Aufnahme
- 40: Laschenaufnahme
- 41: L-förmiges Element
- 42: I-förmiges Element

## Patentansprüche

1. Haltevorrichtung (10) mit
a) einer eine Aufnahme (1) aufweisende Halterung (2),
b) einem in der Aufnahme (1) der Halterung (2) längsverschiebbar geführten, federkraftbeaufschlagten und einen Stiftkopf (3) aufweisenden Stift (4), wobei der Stiftkopf (3) aus der Aufnahme (1) der Halterung (2) herausragt,
c) einer Zentriereinrichtung (5), wobei die Zentriereinrichtung (5) an dem Stift (4) unverschiebbar angeordnet ist und innerhalb der Aufnahme (1) der Halterung (2) mit einer Rückstellkraft versehen ist, welche gegen die Halterung (2) gerichtet ist, und die Zentriereinrichtung (5) aus wenigstens einer Lasche (6, 7, 8) besteht, vorzugsweise allerdings aus wenigstens zwei Laschen (6, 7, 8) besteht, die im Wesentlichen äquidistant über dem Umfang des Stiftes (4) an demselben angeordnet sind, und die wenigstens eine Lasche (6, 7, 8) unter Ausbildung einer Rückstellkraft gegen den Stift (4) verschwenkbar ist,
**dadurch gekennzeichnet, dass**
die wenigstens eine Lasche (6, 7, 8) derart ausgebildet ist, dass sie bei einer Anordnung des Stiftes (4) innerhalb der Aufnahme (1) der Halterung (2) mit einer Kontaktfläche (18) eine Innenwand (19) der Halterung (2) kontaktiert, wobei die Kontaktfläche (18) parallel zur Innenwand (19) verläuft.

2. Haltevorrichtung nach Anspruch 1, **dadurch gekennzeichnet, dass** die Zentriereinrichtung (5) und der Stift (4) aus dem gleichen Material bestehen.

3. Haltevorrichtung nach Anspruch 1 oder 2, **dadurch gekennzeichnet, dass** die Zentriereinrichtung (5) und der Stift (4) einstückig ausgebildet sind und vorzugsweise aus einem Kunststoff bestehen.

4. Haltevorrichtung nach einem der vorhergehenden Ansprüche, **dadurch gekennzeichnet, dass** der Stift (4) ein Positionierungselement (38) aufweist, das mit einer Aufnahme (39) der Halterung (2) korrespondiert.

5. Haltevorrichtung nach einem der vorhergehenden Ansprüche, **dadurch gekennzeichnet, dass** die wenigstens eine Lasche (6, 7, 8) ein Federelement (16) aufweist, welches bei einer Anordnung des Stiftes (4) innerhalb der Aufnahme (1) der Halterung (2) federnd in einer an dem Stift (4) angeordneten Mulde (17) gehalten ist.

6. Haltevorrichtung nach einem der vorhergehenden Ansprüche, **dadurch gekennzeichnet, dass** die wenigstens eine Lasche (6, 7, 8) in einer Laschenaufnahme (40) der Halterung (2) gehalten ist.

7. Haltevorrichtung nach Anspruch 6, **dadurch gekennzeichnet, dass** die wenigstens eine Lasche (6, 7, 8) aus einem L-förmigen Element (41) und einem I-förmigen Element (42) besteht, die gegeneinander federnd an dem Stift (4) angeordnet sind.

8. Haltevorrichtung nach einem der vorhergehenden Ansprüche, **dadurch gekennzeichnet, dass** zur Federkraftbeaufschlagung des Stiftes (4) eine Druckfeder (11) vorgesehen ist, welche sich vorzugsweise mit ihrem ersten Ende (12) an einem Anschlag (14) der Halterung (2) und mit ihrem zweiten Ende (13) an einem Anschlag (15) des Stiftes (4) abstützt.

9. Haltevorrichtung nach einem der vorhergehenden Ansprüche, **dadurch gekennzeichnet, dass** sie zur Anordnung an einen Schalthebel (30) einer Schaltvorrichtung (31) eines Getriebes eines Kraftfahrzeugs, gegebenenfalls unter Zwischenschaltung eines Schaltgestänges oder eines Schaltzuges ausgebildet ist, wobei der Stiftkopf (3) zur Anlage an einer Kontaktoberfläche (32) einer Stiftkopfaufnahme (33) ausgebildet ist.

10. Stift (4) zur Anordnung in einer Haltevorrichtung (10) nach einem der Ansprüche 1 bis 9, mit einem Stiftkopf (3), wobei wenigstens eine Lasche (6, 7, 8) vorgesehen ist, die an dem Stift (4) befestigt ist und die unter Ausbildung einer Rückstellkraft gegen den Stift (4) verschwenkbar ist, **dadurch gekennzeichnet, dass** die wenigstens eine Lasche (6, 7, 8) derart ausgestaltet ist, dass sie bei einer Anordnung des Stiftes (4) innerhalb der Aufnahme (1) der Halterung (2) mit einer Kontaktfläche (18) eine Innenwand (19) der Halterung (2) kontaktiert und wobei die Kontaktfläche (18) parallel zur Innenwand (19) verläuft.

11. Stift (4) nach Anspruch 10, **dadurch gekennzeichnet, dass** die wenigstens eine Lasche (6, 7, 8) ein Federelement (16) aufweist, welches bei einem Verschwenken der wenigstens einen Lasche (6, 7, 8) federnd in einer an dem Stift (4) angeordneten Mulde (17) aufnehmbar ist.

12. Stift (4) nach Anspruch 11, **dadurch gekennzeichnet, dass** die wenigstens eine Lasche (6, 7, 8) dazu ausgebildet ist, in einer Laschenaufnahme (40) einer Halteeinrichtung nach einem der Ansprüche 6 bis 9 aufgenommen zu werden.

## Claims

1. Retaining apparatus (10) having
a) a mount (2) which has a receptacle (1),
b) a pin (4) which is guided in a longitudinally displaceable manner in the receptacle (1) of the mount (2), which is subjected to spring force and which has a pin head (3), wherein the pin head (3) protrudes out of the receptacle (1) of the mount (2),
c) a centring device (5),
wherein the centring device (5) is arranged on the pin (4) in a non-displaceable manner and is provided with a restoring force within the receptacle (1) of the mount (2), said restoring force being directed against the mount (2), and the centring device (5) is composed of at least one tab (6, 7, 8), but is preferably composed of at least two tabs (6, 7, 8) which are arranged on the pin (4) substantially equidistantly over the circumference of the latter, and the at least one tab (6, 7, 8) can be pivoted to produce a restoring force against the pin (4),
**characterized in that**
the at least one tab (6, 7, 8) is designed in such a way that, when the pin (4) is arranged within the receptacle (1) of the mount (2), said tab contacts an inner wall (19) of the mount (2) with a contact area (18), wherein the contact area (18) runs parallel to the inner wall (19).

2. Retaining apparatus according to Claim 1, **characterized in that** the centring device (5) and the pin (4) consist of the same material.

3. Retaining apparatus according to Claim 1 or 2, **characterized in that** the centring device (5) and the pin (4) are configured in one piece and are preferably composed of a plastic.

4. Retaining apparatus according to one of the preceding claims, **characterized in that** the pin (4) has a positioning element (38) which corresponds to a receptacle (39) of the mount (2).

5. Retaining apparatus according to one of the preceding claims, **characterized in that** the at least one tab (6, 7, 8) has a spring element (16) which, when the pin (4) is arranged within the receptacle (1) of the mount (2), is retained in a resilient manner in a recess (17) which is arranged on the pin (4).

6. Retaining apparatus according to one of the preceding claims, **characterized in that** the at least one tab (6, 7, 8) is retained in a tab receptacle (40) of the mount (2).

7. Retaining apparatus according to Claim 6, **characterized in that** the at least one tab (6, 7, 8) is composed of an L-shaped element (41) and an I-shaped element (42), which are arranged resiliently in relation to one another on the pin (4).

8. Retaining apparatus according to one of the preceding claims, **characterized in that**, in order to subject the pin (4) to a spring force, there is provided a compression spring (11) which is preferably supported with the first end (12) thereof on a stop (14) of the mount (2) and with the second end (13) thereof on a stop (15) of the pin (4).

9. Retaining apparatus according to one of the preceding claims, **characterized in that** it is possibly configured with the interposition of a shifting linkage or a shifting cable in order to be arranged on a shifting lever (30) of a shifting apparatus (31) of a transmission of a motor vehicle, wherein the pin head (3) is configured for abutment against a contact surface (32) of a pin head receptacle (33).

10. Pin (4) for arrangement in a retaining apparatus (10) according to one of Claims 1 to 9, having a pin head (3), wherein there is provided at least one tab (6, 7, 8) which is fastened to the pin (4) and which can be pivoted to produce a restoring force against the pin (4), **characterized in that** the at least one tab (6, 7, 8) is designed in such a way that, when the pin (4) is arranged within the receptacle (1) of the mount (2), said tab contacts an inner wall (19) of the mount (2) with a contact area (18) and wherein the contact area (18) runs parallel to the inner wall (19).

11. Pin (4) according to Claim 10, **characterized in that** the at least one tab (6, 7, 8) has a spring element (16) which, when the at least one tab (6, 7, 8) is pivoted, can be received in a resilient manner in a recess (17) which is arranged on the pin (4).

12. Pin (4) according to Claim 11, **characterized in that** the at least one tab (6, 7, 8) is configured to be received in a tab receptacle (40) of a retaining device according to one of Claims 6 to 9.

## Revendications

1. Dispositif de retenue (10) comprenant
a) un support (2) comprenant un logement (1),
b) une tige (4) qui est guidée de manière mobile longitudinalement dans le logement (1) du support (2), sollicitée par une force de ressort et comprend une tête de tige (3), dans lequel la tête de tige (3) fait saillie hors du logement (1) du support (2),
c) un dispositif de centrage (5), dans lequel le dispositif de centrage (5) est agencé de manière non mobile sur la tige (4) et est, à l'intérieur du logement (1) du support (2), doté d'une force de rappel qui est orientée à l'encontre du support (2), et le dispositif de centrage (5) est constitué d'au moins une languette (6, 7, 8), mais de préférence d'au moins deux languettes (6, 7, 8) qui sont disposées sur la tige (4) sensiblement de manière équidistante sur sa périphérie, et l'au moins une languette (6, 7, 8) peut être pivotée contre la tige (4) en produisant une force de rappel,
**caractérisé en ce que** l'au moins une languette (6, 7, 8) est configurée de telle sorte qu'en cas d'agencement de la tige (4) à l'intérieur du logement (1) du support (2), elle vient en contact, par une surface de contact (18), avec une paroi intérieure (19) du support (2), la surface de contact (18) s'étendant parallèlement à la paroi intérieure (19).

2. Dispositif de retenue selon la revendication 1, **caractérisé en ce que** le dispositif de centrage (5) et la tige (4) sont constitués de la même matière.

3. Dispositif de retenue selon la revendication 1 ou 2, **caractérisé en ce que** le dispositif de centrage (5) et la tige (4) sont formés d'une seule pièce et sont constitués de préférence d'une matière synthétique.

4. Dispositif de retenue selon l'une des revendications précédentes, **caractérisé en ce que** la tige (4) comprend un élément de positionnement (38) qui correspond à un logement (39) du support (2).

5. Dispositif de retenue selon l'une des revendications précédentes, **caractérisé en ce que** l'au moins une languette (6, 7, 8) comprend un élément ressort (16), lequel est, en cas d'agencement de la tige (4) à l'intérieur du logement (1) du support (2), retenu de manière élastique dans une cavité (17) agencée sur la tige (4).

6. Dispositif de retenue selon l'une des revendications précédentes, **caractérisé en ce que** l'au moins une languette (6, 7, 8) est retenue dans un logement de languette (40) du support (2).

7. Dispositif de retenue selon la revendication 6, **caractérisé en ce que** l'au moins une languette (6, 7, 8) est constituée d'un élément en forme de L (41) et d'un élément en forme de I (42) qui sont disposés sur la tige (4) de manière élastique l'un contre l'autre.

8. Dispositif de retenue selon l'une des revendications précédentes, **caractérisé en ce que** pour la sollicitation par force de ressort de la tige (4), il est prévu un ressort de compression (11) qui s'appuie, de préférence par sa première extrémité (12), contre une butée (14) du support (2) et, par sa deuxième extrémité (13), contre une butée (15) de la tige (4).

9. Dispositif de retenue selon l'une des revendications précédentes, **caractérisé en ce qu'**il est réalisé pour l'agencement sur un levier de changement de vitesses (30) d'un dispositif de changement de vitesses (31) d'une transmission d'un véhicule automobile, éventuellement par l'intermédiaire d'une timonerie de changement de vitesses ou d'un câble de changement de vitesses, la tête de tige (3) étant réalisée pour l'appui contre une surface de contact (32) d'un logement de tête de tige (33).

10. Tige (4) pour l'agencement dans un dispositif de retenue (10) selon l'une des revendications 1 à 9, comprenant une tête de tige (3), au moins une languette (6, 7, 8) étant prévue, laquelle est fixée à la tige (4) et peut être pivotée contre la tige (4) en produisant une force de rappel, **caractérisée en ce que** l'au moins une languette (6, 7, 8) est configurée de telle sorte qu'en cas d'agencement de la tige (4) à l'intérieur du logement (1) du support (2), elle vient en contact, par une surface de contact (18), avec une paroi intérieure (19) du support (2), et la surface de contact (18) s'étendant parallèlement à la paroi intérieure (19).

11. Tige (4) selon la revendication 10, **caractérisée en ce que** l'au moins une languette (6, 7, 8) comprend un élément ressort (16), lequel peut, en cas de pivotement de l'au moins une languette (6, 7, 8), être logé de manière élastique dans une cavité (17) agencée sur la tige (4).

12. Tige (4) selon la revendication 11, **caractérisée en ce que** l'au moins une languette (6, 7, 8) est réalisée de manière à être logée dans un logement de languette (40) d'un dispositif de retenue selon l'une des revendications 6 à 9.
